# EUROPÄISCHE PATENTSCHRIFT

(11) **EP 1 395 739 B1**
(45) Veröffentlichungstag und Bekanntmachung des Hinweises auf die Patenterteilung: **27.02.2008**
(21) Anmeldenummer: 02740336.9
(22) Anmeldetag: 10.05.2002
(51) Int. Cl.: F02B 23/10

(54) **BRENNSTOFFEINSPRITZSYSTEM**
FUEL INJECTION SYSTEM
SYSTEME D'INJECTION DE CARBURANT

(30) Priorität: 21.05.2001 DE 10124750
(43) Veröffentlichungstag der Anmeldung: 10.03.2004
(73) Patentinhaber: ROBERT BOSCH GMBH, 70442 Stuttgart (DE)
(72) Erfinder: ARNDT, Stefan, 70569 Stuttgart (DE); WÜRFEL, Gernot, 71665 Vaihingen/Enz (DE); RAIMANN, Jürgen, 71263 Weil Der Stadt (DE); GRZESZIK, Roman, 37127 Dransfeld (DE)
(74) Vertreter: Körfer, Thomas
(86) Internationale Anmeldenummer: PCT/DE2002/001694
(87) Internationale Veröffentlichungsnummer: WO 2002/095201

(56) Entgegenhaltungen:
- DE-A- 19 804 463
- US-A- 5 170 758
- US-A- 5 735 240
- US-A- 6 045 063
- PATENT ABSTRACTS OF JAPAN vol. 017, no. 656 (M-1521), 6. Dezember 1993 (1993-12-06) -& JP 05 214938 A (NISSAN MOTOR CO LTD), 24. August 1993 (1993-08-24)
- PATENT ABSTRACTS OF JAPAN vol. 1999, no. 05, 31. Mai 1999 (1999-05-31) -& JP 11 050848 A (TOYOTA MOTOR CORP), 23. Februar 1999 (1999-02-23)
- PATENT ABSTRACTS OF JAPAN vol. 018, no. 338 (M-1628), 27. Juni 1994 (1994-06-27) -& JP 06 081656 A (NISSAN MOTOR CO LTD), 22. März 1994 (1994-03-22)
- PATENT ABSTRACTS OF JAPAN vol. 012, no. 171 (M-700), 21. Mai 1988 (1988-05-21) -& JP 62 288314 A (ISUZU MOTORS LTD), 15. Dezember 1987 (1987-12-15)

## Beschreibung

### Stand der Technik

Die Erfindung geht aus von einem Brennstoffeinspritzsystem nach der Gattung des Hauptanspruchs.

Bei gemischverdichtenden, fremdgezündeten Brennkraftmaschinen mit innerer Gemischbildung ist für den Schichtladebetrieb im Zündkerzenbereich eine "Gemischwolke" erforderlich, die ein bestimmtes Brennstoff-Luftverhältnis im zündfähigen Bereich aufweist. Insbesondere im Teillastbetrieb und im Leerlauf sind dadurch erhebliche Verbrauchsvorteile zu erreichen, da nicht das gesamte Brennraumvolumen ein angereichertes zündfähiges Gemisch enthält.

Um eine solche Gemischwolke zu erzeugen, sind im wesentlichen drei Verfahren bekannt. Das wandgeführte, das luftgeführte und das strahlgeführte Brennstoffeinspritzsystem.

Beim wandgeführten Brennstoffeinspritzsystem wird der Brennstoff durch eine Luftwirbel mitgenommen, der sich an die Wand des Zylinders anlegt und zumeist an dem besonders ausgebildeten Kolben umgelenkt wird. Der Brennstoff wird dazu in einen Wirbel nahe der Wandfläche des Zylinders und/oder auf die Kolbenfläche durch ein Brennstoffeinspritzventil gespritzt, das seitlich des Einlaßventils zur Zylinderwand hin angeordnet ist. Durch den Wirbel wird der Brennstoff unter gleichzeitiger Gemischbildung zur zentral im Brennraum angeordneten Zündkerze getragen.

Ein wandgeführtes Brennstoffeinspritzsystem ist beispielsweise aus der EP 0 519 275 B1 bekannt. Eine Zündkerze ist in einem Mittelabschnitt einer inneren Wand eines Zylinderkopfes angeordnet und eine Brennstoffeinspritzeinrichtung ist an einem Umfangsabschnitt der inneren Wand des Zylinderkopfes angeordnet. Ein Kolben weist einen unter der Zündkerze befindlichen Vertiefungsabschnitt auf, auf dessen Fläche der Brennstoff schräg eingespritzt wird. Der Brennstoff wird am Rand der Vertiefungsfläche umgelenkt. Ein Wirbel trägt den Brennstoff weiter mit sich in Richtung Zündkerze.

Nachteilig an diesem Stand der Technik ist, daß die turbulenzerzeugenden Maßnahmen, wie besondere Ausbildungen der Brennraumgeometrie, insbesondere Ausbildungen der Kolbenform nur für einen bestimmten Drehzahlbereich optimiert werden könnten. Gerade im Bereich der Teillast und des Leerlaufs, d.h. gerade im Bereich der Teillast und des Leerlaufs, d. h. bei geringen Brennstoff-Einspritzmengen und Füllungsgraden und/oder niedrigen Drehzahlen können die nötigen Wirbelbildungen nur mit einer Drosselung erreicht werden. Dadurch kommt es jedoch zu einer Erhöhung des Brennstoffverbrauchs. Weiterhin ist nachteilig, daß beim wandgeführten Brennstoffeinspritzsystem eine aufwendigere Kolbenform mit einer Umlenkkante nötig ist.

Aus der DE 38 08 635 C2 ist eine Brennstoffeinspritzvorrichtung zum direkten Einspritzen von Brennstoff in den Zylinder einer gemischverdichtenden Brennkraftmaschine als ein luftgeführtes Brennnstoffeinspritzsystem bekannt. Die Brennstoffeinspritzvorrichtung umfaßt dabei ein Brennstoffeinspritzventil, das in der Zylinderwand in einigem Abstand vom Zylinderkopf und gegenüber der Auslaßöffnung angeordnet ist und eine Ausgangsöffnung aufweist, wobei die Strahlachse des Brennstoffeinspritzventils auf den Bereich um die im Zylinderkopf angeordnete Zündkerze gerichtet ist. Das Brennstoffeinspritzventil weist dabei eine magnetbetätigte Ventilnadel mit schraubenförmigen Drallnuten zum Erzeugen einer Drallströmung des Brennstoffstrahls auf. Die Gesamtquerschnittsfläche der Drallnuten ist um mindestens die Hälfte kleiner als die Querschnittsfläche der Ausgangsöffnung, wobei das Brennstoffeinspritzventil oberhalb einer Spülöffnung angeordnet ist und mit seiner Strahlachse auf den in der Zylinderkopfmitte angeordneten Zündpunkt zeigt. Durch die Luftströmung wird der eingespritzte Brennstoff ohne die Wand des Zylinders zu berühren in Richtung der Zündkerze mitgenommen und zu dieser transportiert.

Der Gemischtransport zur Zündkerze gelingt auch bei luftgeführten Brennstoffeinspritzsystemen aus den bereits genannten Gründen im Leerlauf- und unteren Teillastbetrieb nur sehr unvollkommen, im mittleren Teillastbetrieb zum Teil nur mit unvertretbar geringen Serienstreuungen der verwendeten Hochdruckeinspritzventile bzw. der Strömungsführung durch das Saugrohr. Die mangelhafte Reproduzierbarkeit zeigt sich vor allem an überhöhten Emissionen von unverbrannten Kohlenwasserstoffen, verursacht durch einzelne Verbrennungsaussetzer.

Aus der DE 198 04 463 A1 ist ein strahlgeführtes Brennstoffeinspritzsystem ' für gemischverdichtende, fremdgezündete Brennkraftmaschinen bekannt, welches mit wenigstens einem Brennstoffeinspritzventil den Brennstoff in einen von einer Kolben-/Zylinder-Anordnung gebildeten Brennraum einspritzt und mit einer in den Brennraum ragenden Zündkerze versehen ist. Der Düsenkörper des Brennstoffeinspritzventils ist dabei in der Nähe der zentral im Brennraum gelegenen Zündkerze angeordnet und mit wenigstens einer Reihe über den Umfang des Düsenkörpers verteilt angeordneten Einspritzlöchern versehen. Durch eine gezielte Einspritzung von Brennstoff über die Einspritzlöcher wird ein strahlgeführtes Brennverfahren durch Bildung einer Gemischwolke realisiert, wobei wenigstens ein Strahl in Richtung auf die Zündkerze gerichtet ist. Weitere Strahlen sorgen dafür, daß eine wenigstens annähernd geschlossene bzw. zusammenhängende Gemischwolke gebildet wird.

Aus der DE 196 42 653 C1 ist ein Verfahren zur Bildung eines zündfähigen Brennstoff-Luftgemisches bekannt. In den Zylindern von direkt einspritzenden Brennkraftmaschinen ist ein zündfähiges Brennstoff-Luftgemisch bildbar, indem in jeden von einem Kolben begrenzten Brennraum mittels eines Injektors bei Freigabe einer Düsenöffnung durch Abheben eines Ventilgliedes von einem die Düsenöffnung umfassenden Ventilsitz Brennstoff eingespritzt wird. Um unter allen Betriebsbedingungen der Brennkraftmaschine, insbesondere im Schichtladebetrieb, eine verbrauchs- und emissionsoptimierte innere Gemischbildung in jedem Betriebspunkt des gesamten Kennfeldes zu ermöglichen, ist vorgesehen, daß der Öffnungshub des Ventilgliedes und die Einspritzzeit variabel einstellbar sind.

Nachteilig an diesen strahlgeführten Brennstoffeinspritzsystemen ist, daß bisherige Zylinderköpfe mit einer zentral in der Zylinderachse im Zylinderkopf angeordneten Zündkerze nur mit erheblichen Veränderungen verwendet werden können, da der zusätzliche Einbauraum für das Brennstoffeinspritzventil in der Nähe der Zündkerze nachteilig eine Verlegung der zumeist zwei Einlaßventile erfordert.

Eine Kompatibilität zu den bisherigen Fertigungswerkzeugen und Zylinderkopfformen ist zwar bei einer Anordnung des Brennstofffeinspritzventils an der Zylinderwand auf der Seite der Einlaßventile gegeben, jedoch treten dann die zuvor beschriebenen Nachteile der luftgeführten und der wandgeführten Brennstoffeinspritzsysteme auf.

Die US-A-5 170 758 offenbart eine luftverdichtende, ventilgesteuerte Brennkraftmaschine für selbstzündungsunwillige Kraftstoffe, mit einer Einspritzdüse zur direkten Einspritzung des Kraftstoffes in einen im Kolben vorgesehenen Brennraum und mit einer Zündkerze sowie mit Vorrichtungen, um der einströmenden Verbrennungsluft eine Drallbewegung zu erteilen. Um mit relativ einfachen Mitteln eine zuverlässige Zündung zu erreichen, ist die Zündkerze im Zentralbereich des Brennraums angeordnet und es wird weiterhin eine Einspritzdüse mit mehreren Spritzöffnungen verwendet.

Die DE 198 04 463 A1 offenbart ein Kraftstoffeinspritzsystem für Ottomotoren mit einer Einspritzdüse, die Kraftstoff in einen von einer Kolben-/Zylinder-Konstruktion gebildeten Brennraum einspritzt, und mit einer in den Brennraum ragenden Zündkerze. Die Einspritzdüse ist mit wenigstens einer Reihe über den Umfang der Einspritzdüse verteilt angeordneten Einspritzlöchern versehen. Durch eine gezielte Einspritzung von Kraftstoff über die Einspritzlöcher wird ein strahlgeführtes Brennverfahren durch Bildung einer Gemischwolke realisiert mit wenigstens einem Strahl, der zur Zündung in Richtung auf die Zündkerze gerichtet ist und mit weiteren Strahlen, durch die ein wenigstens annähernd geschlossene Gemischwolke gebildet wird.

Die US-A-5 735 240 offenbart einen Verbrennungsmotor, wobei eine Einspritzdüse in der Zylinderbohrung entweder auf der Einlass- oder auf der Auslassseite angeordnet ist. Die Einspritzdüse ist derartig angeordnet, dass sie sich unterhalb der Oberseite des Kopfes des Zylinders an einer Totpunktposition befindet und eine Ausnehmung ist in dem Kolbenkopf gebildet, um eine Einspritzung vorzusehen, sogar, wenn sich der Kolben dem oberen Totpunkt nähert.

Die JP 05 214938 A und die JP 06 081656 A offenbaren jeweils Anordnungen, bei denen eine Zündkerze in der Zylinderkopfmitte angeordnet ist und ein Brennstoffeinspritzventil seitlich im Bereich der Einlass- oder Auslassventile angeordnet ist.

### Vorteile der Erfindung

Das erfindungsgemäße Brennstoffeinspritzsystem mit den kennzeichnenden Merkmalen des Hauptanspruchs hat demgegenüber den Vorteil, daß eine Anordnung des Brennstoffeinspritzventils an der Zylinderwand im Zylinderkopf auf der Seite der Einlaßventile möglich ist und der Zylinderkopf mit den bisherigen Zylinderköpfen für Saugrohreinspritzung in der Fertigung kompatibel ist und die Nachteile der wand- und luftgeführten Brennstoffeinspritzsysteme vermieden werden, da das erfindungsgemäße Brennstoffeinspritzsystem ein strahlgeführtes Brennstoffeinspritzsystem ist. Entgegen der vorgefaßten Meinung der Fachwelt hat sich gezeigt, daß auch aus der Position des Brennstoffeinspritzventils bei dem erfindungsgemäßen Brennstoffeinspritzsystem ein strahlgeführtes Erzeugen einer Gemischwolke im Teillastbetrieb möglich ist. Ein Brennstoffstrahl eines Mehrlochbrennstoffeinspritzventils kann genügend genau und exakt durch den halben Zylinderdurchmesser eingespritzt werden.

Weiterhin ist vorteilhaft, daß die Gemischbildung zur Zündung unabhängig von einer Wirbelbildung ist und die Brennraumgeometrie, insbesondere die Form des Kolbens unabhängig und zur Optimierung weiterer Gesichtspunkte geeignet gewählt werden kann.

Durch die in den Unteransprüchen aufgeführten Maßnahmen sind vorteilhafte Weiterbildungen des im Hauptanspruch angegebenen Brennstoffeinspritzsystems möglich.

Insbesondere werden die Thermoschockbelastung und die Verrußung der Zündkerze durch das auf die Zündkerzenposition bezogene tangentiale Einspritzen von Brennstoff vermindert. Die Brennstoffstrahlen sind also nicht direkt auf die Zündkerze gerichtet.

Von Vorteil ist außerdem, daß durch zwei Brennstoffeinspritzstrahlen und Anordnung der Zündkerze auf der Winkelhalbierenden zwischen diesen Brennstoffstrahlen bei geeigneter Wahl des Winkels ein günstiges Zündverhalten erreicht werden kann.

Weitere Brennstoffstrahlen können günstig in den übrigen Brennraum ausgerichtet werden, der sich bildet, wenn der Kolben sich ungefähr in der Nähe des oberen Totpunktes befindet.

Insbesondere können die Brennstoffstrahlen vorteilhaft in drei Ebenen aufgeteilt sein, die zueinander gleiche Winkel zwischen ungefähr 20° und 30° einnehmen. Dabei besteht die oberste Ebene, die dem Zylinderkopf am nächsten liegt, aus den beiden die Zündkerze flankierenden Brennstoffstrahlen, die zweite aus drei Brennstoffstrahlen, von denen der mittlere auf der in Richtung der Zylinderachse projezierten Winkelhalbierenden der Brennstoffstrahlen der ersten Ebene liegt und die unterste Ebene wiederum aus zwei Brennstoffstrahlen, die unter denen der ersten Ebene liegen.

Bei dieser Ausbildung der Brennstoffstrahlen ist ein gute Ausbreitung der Flammfront nach der Zündung über die drei Ebenen hinweg möglich.

Der Kolben kann mit einer Quetschkante und mit einer Kolbenmulde ausgebildet sein und die Form des Strahlbildes an diesen dadurch bestimmten Brennraum angepaßt sein.

Die Brennstoffstrahlen können Flachstrahlen sein, die durch Schlitze als Abspritzöffnungen eingespritzt werden.

In einer alternativen günstigen Ausführungsform sind die weiteren Brennstoffstrahlen mit den tangential zur Zündkerze ausgerichteten Brennstoffstrahlen zusammen in einer Ebene angeordnet und ist deren Anzahl gerade und in gleicher Anzahl beidseits der Zündkerze angeordnet.

Diese Ausführungsform ermöglicht eine günstige Gemischbildung vor allem, wenn keine oder eine sehr flache Kolbenmulde vorliegt.

### Zeichnung

Ausführungsbeispiele der Erfindung sind in den Zeichnungen vereinfacht dargestellt und in der nachfolgenden Beschreibung näher erläutert. Es zeigen:
- Fig. 1: einen schematischen Schnitt durch ein Brennstoffeinspritzsystem gemäß dem Stand der Technik für ein wandgeführtes Brennverfahren,
- Fig. 2: einen schematischen Schnitt durch ein Brennstoffeinspritzsystem gemäß dem Stand der Technik für ein luftgeführtes Brennverfahren,
- Fig. 3: einen schematischen Schnitt durch ein Brennstoffeinspritzsystem gemäß dem Stand der Technik für ein strahlgeführtes Brennverfahren,
- Fig. 4: einen schematischen Schnitt durch ein erstes Ausführungsbeispiel des erfindungsgemäßen Brennstoffeinspritzsystems,
- Fig. 5: eine schematische Darstellung des Abspritzabschnitts des Brennstoffeinspritzventils der Fig. 4 in Aufsicht und dessen Orientierung zu der Zündkerze,
- Fig. 6: eine schematische Darstellung des Abspritzabschnitts des Brennstoffeinspritzventils der Fig. 4 in Seitenansicht,
- Fig. 7: eine schematische Darstellung des Abspritzabschnitts des Brennstoffeinspritzventils der Fig. 4 in einer günstigen Ausführungsform in Seitenansicht und
- Fig. 8: eine schematische Darstellung des Abspritzabschnitts des Brennstoffeinspritzventils der Fig. 7 in Aufsicht.

### Beschreibung der Ausführungsbeispiele

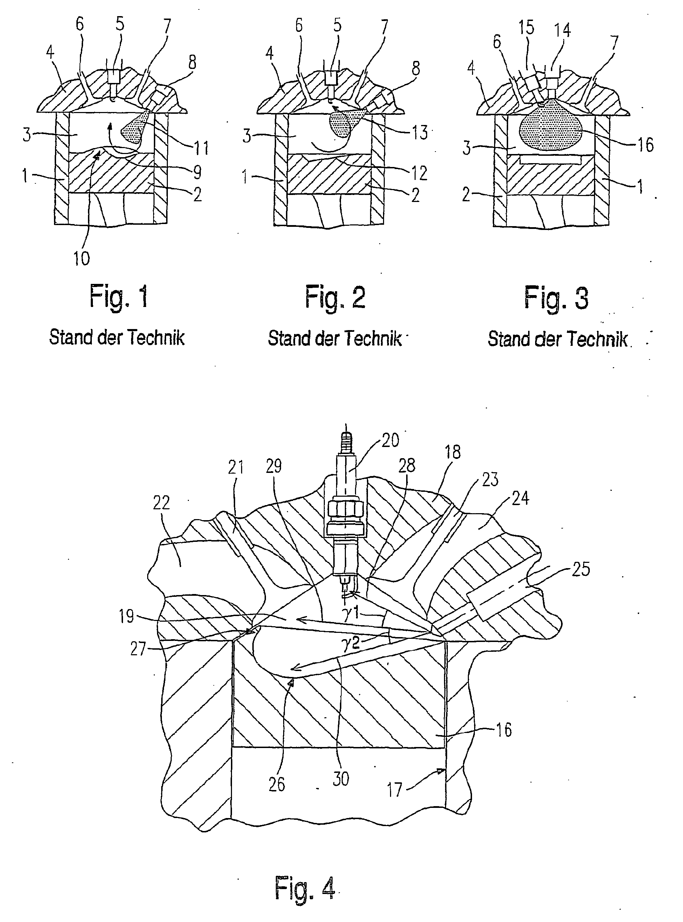

Die Fig. 1, 2 und 3 zeigen schematisch den Grundaufbau der drei wichtigsten Brennstoffeinspritzsysteme nach dem Stand der Technik, um zunächst die jeweiligen Vorteile und Nachteile zu verdeutlichen und zur Erläuterung, inwieweit die Erfindung unter Vermeidung der Nachteile die Vorteile der Brennstoffeinspritzsysteme verknüpft.

Fig. 1 zeigt einen schematischen Schnitt durch ein Brennstoffeinspritzsystem gemäß dem Stand der Technik für ein wandgeführtes Brennstoffeinspritzsystem. In einem ausschnittsweisen, schematisiert dargestellten Zylinder 1 ist ein Kolben 2 geführt. Ein Brennraum 3 wird durch einen dem Zylinder 1 aufliegenden Zylinderkopf 4 begrenzt. Eine Zündkerze 5 befindet sich in der Mitte des Zylinders 1 und seitlich sind ein Auslaßventil 6 sowie ein Einlaßventil 7 für den Gasaustausch angeordnet. Üblicherweise werden meist zwei Einlaßventile 7 und Auslaßventile 6 vorgesehen. Auf der Seite des Einlaßventils 7 zur Wand des Zylinders 1 hin ist im Zylinderkopf 4 ein Brennstoffeinspritzventil 8 angeordnet. Der Kolben 2 weist eine deutlich ausgeformte Kolbenmulde 9 auf und ungefähr in Kolbenmitte eine die Kolbenmulde 9 begrenzende Umlenkkante 10.

Der Brennstoff wird von dem Brennstoffeinspritzventil 8 in Richtung der Kolbenmulde 9 eingespritzt. Dies ist in der Fig. 1 durch eine Brennstoffwolke 11 angedeutet. Dabei trifft der Brennstoff in den Wirbel aus Luft und auf die Kolbenmulde 9. Durch den Wirbel wird der Brennstoff zur Umlenkkante 10 getrieben und unter Bildung eines Gemisches weiter zur Zündkerze 5. Der Weg dieser Gemischwolke ist durch einen Pfeil verdeutlicht.

Fig. 2 zeigt einen schematischen Schnitt durch ein Brennstoffeinspritzsystem gemäß dem Stand der Technik für ein luftgeführtes Brennstoffeinspritzsystem. Soweit der prinzipielle Aufbau mit den Teilen Zylinder 1, Kolben 2, Brennraum 3, Zylinderkopf 4, Zündkerze 5, Auslaßventil 6, Einlaßventil 7 und Brennstoffeinspritzventil 8 dem der Fig. 1 entspricht, werden dieselben Bezugszeichen verwendet. Abweichend ist eine relativ flache Kolbenmulde 12 an dem Kolben 2 ausgeformt.

Der Brennstoff wird von dem Brennstoffeinspritzventil 8 in Richtung eines Wirbels im Brennraum 3 eingespritzt. Dies ist in der Fig. 2 durch eine Brennstoffwolke 13 angedeutet. Durch den Wirbel wird der Brennstoff unter Bildung eines Gemisches weiter zur Zündkerze 5 getrieben, ohne eine Wandung zu berühren. Der Weg dieser Gemischwolke ist durch einen Pfeil verdeutlicht.

Wand- und luftgeführte Brennstoffeinspritzsysteme bieten den Vorteil einer günstigen Position des Brennstoffeinspritzventils 8, die eine hohe Ähnlichkeit des Zylinderkopfes 4 zu herkömmlichen Zylinderköpfen für die Saugrohreinspritzung und die Weiterverwendung von Fertigungseinrichtungen ermöglicht. Nachteilig ist die stets notwendige Ausbildung eines Wirbels, durch die eine Optimierung des Brennraums nach sonstigen Gesichtspunkten erschwert wird und der nur für bestimmte Drehzahlen und Lastzustände optimiert werden kann sowie zu Drosselverlusten führt.

Fig. 3 zeigt einen schematischen Schnitt durch ein Brennstoffeinspritzsystem gemäß dem Stand der Technik für ein strahlgeführtes Brennstoffeinspritzsystem. Soweit der prinzipielle Aufbau mit den Teilen Zylinder 1, Kolben 2, Brennraum 3, Zylinderkopf 4, Auslaßventil 6, und Einlaßventil 7 dem der Fig. 1 entspricht, werden dieselben Bezugszeichen verwendet. Abweichend sind ein Brennstoffeinspritzventil 14 und eine Zündkerze 15 in der Mitte des Zylinders 1 im Brennraum 3 zentral angeordnet.

Eine Brennstoffwolke 15, die aus einzelnen Brennstoffstrahlen besteht, wird von dem Brennstoffeinspritzventil 14 in den Brennraum 3 eingespritzt. Dabei werden zumindest Teile der Brennstoffwolke 16 direkt in die Nähe der Zündkerze 14 gespritzt und erzeugen dort ein zündfähiges Gemisch.

Ein strahlgeführtes Brennstoffeinspritzsystem bietet den Vorteil, den übrigen Brennraum 3 relativ frei gestalten zu können und daß keine Drosselungsverluste auftreten. Nachteilig ist die fertigungstechnisch und vom Einbauraum ungünstige Position des Brennstoffeinspritzventils 15.

Fig. 4 zeigt einen schematischen Schnitt durch ein erstes Ausführungsbeispiel des erfindungsgemäßen Brennstoffeinspritzsystems mit einem Kolben 16, der in einer Zylinderbohrung 17 geführt ist und mit einem Zylinderkopf 18 einen Brennraum 19 umgrenzt. Eine Zündkerze 20 ist in der Mitte der Zylinderbohrung 17 und seitlich sind ein Auslaßventil 21 mit Auslaßkanal 22 sowie ein Einlaßventil 23 mit Einlaßkanal 24 für den Gasaustausch angeordnet. Üblicherweise werden meist zwei Einlaßventile 23 und Auslaßventile 21 vorgesehen. Auf der Seite des Einlaßventils 23 zur Wand der Zylinderbohrung 17 hin ist im Zylinderkopf 18 ein Brennstoffeinspritzventil 25 angeordnet. Der Kolben 16 weist eine deutlich ausgeformte Kolbenmulde 26 auf und eine die Kolbenmulde 26 begrenzende Quetschkante 27.

Der Kolben 16 ist in einer Stellung in der Zylinderbohrung 17 dargestellt, die dem Zeitpunkt der Brennstoffeinspritzung durch das Brennstoffeinspritzventil 25 entspricht. Das Brennstoffeinspritzventils 25 weist Abspritzöffnungen auf, die so angeordnet sind, daß Brennstoffstrahlen 28 einer ersten Ebene in den Bereich der Zündkerze 20 spritzen. Brennstoffstrahlen 29 einer zweiten Ebene nehmen zu den Brennstoffstrahlen der ersten Ebene in Bezug auf die Ebenen einen Winkel γ1 ein. Brennstoffstrahlen 30 einer dritten Ebene, die zu den Brennstoffstrahlen der zweiten Ebene in Bezug auf die Ebenen einen Winkel γ2 einnehmen, füllen den Bereich der Kolbenmulde 26. Die Brennstoffstrahlen sind durch Pfeile angedeutet. Der Winkel γ1 ist gleich dem Winkel γ2.

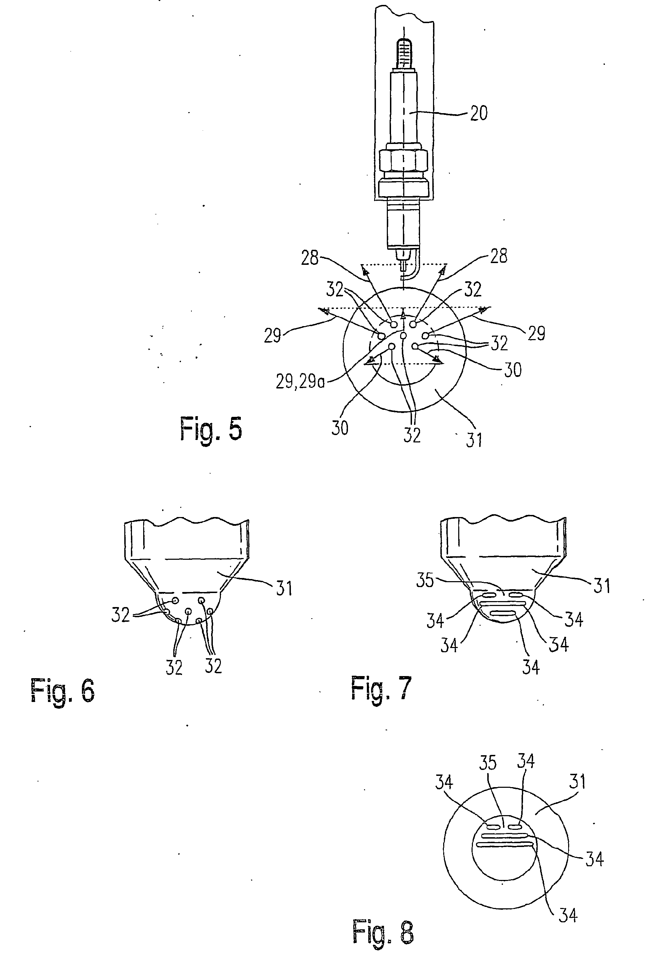

Fig. 5 zeigt eine schematische Darstellung eines Abspritzabschnitts 31 des Brennstoffeinspritzventils 25 der Fig. 4 in Aufsicht und dessen Orientierung zu der Zündkerze 20 schematisch. Aus Abspritzöffnungen 32 werden als Pfeile dargestellte Brennstoffstrahlen 29,30,31 der drei Ebenen abgespritzt. In der hier beschriebenen Ausführungsform sind zwei Brennstoffstrahlen 29 der ersten Ebene tangential zur Zündkerze 20 ausgerichtet und so orientiert, daß die Zündkerze 20 auf einer Winkelhalbierenden der Brennstoffstrahlen 29 der ersten Ebene liegt. Durch eine gepunktete Linie zwischen den Pfeilspitzen ist die Anordnung in einer Ebene verdeutlicht. Drei Brennstoffstrahlen 30 der zweiten Ebene sind zu den Brennstoffstrahlen 29 der ersten Ebene versetzt angeordnet, so daß der mittlere Brennstoffstrahl 29a unter der Zündkerze 20 orientiert ist. Zwei Brennstoffstrahlen 30 der dritten Ebene sind unter den Brennstoffstrahlen. 28 der ersten Ebene ausgerichtet.

Fig. 6 zeigt eine schematische Darstellung des Abspritzabschnitts 31 des Brennstoffeinspritzventils 25 der Fig. 4 in Seitenansicht von der Zündkerze 20 aus gesehen. Die Abspritzöffnungen 32 sind über eine Kugelfläche 33 in drei Reihen verteilt. Durch die Anordnung kann ein Abspritzen in drei Ebenen erreicht werden.

Vorteilhaft kann bei dem erfindungsgemäßen Brennstoffeinspritzsystem in der vorliegenden Ausführungsform das Brennstoffeinspritzventil 25 im Brennraum 19 seitlich angeordnet werden und somit eine hohe Kompatibilität zu herkömmlichen Zylinderköpfen erreicht werden. Der restliche Brennraum kann relativ unabhängig gestaltet werden, da durch die Brennstoffstrahlen 29 der ersten Ebene ein zündfähiges Gemisch im Bereich der' Zündkerze 20 gebildet wird. Insbesondere kann durch die vorliegende günstige Ausführungsform der gesamte Brennraum 19 einschließlich des Bereichs der Kolbenmulde 26 mit Brennstoffstrahlen erreicht werden. Es hat sich gezeigt, daß entgegen bisheriger Ansicht eine Einspritzung eines Brennstoffstrahls 28 von der Seite des Brennraums 19 zur Zündkerze 20 möglich ist.

Fig. 7 zeigt eine schematische Darstellung des Abspritzabschnitts 31 des Brennstoffeinspritzventils 25 der Fig. 4 in einer alternativen günstigen Ausführungsform in Seitenansicht von der Zündkerze 20 aus. Anstatt Abspritzöffnungen sind hier Schlitze 34 vorgesehen, durch die Flachstrahlen erzeugt werden können. Durch einen Steg 35 wird verhindert, daß Brennstoff direkt auf die Zündkerze 25 gespritzt wird.

Fig. 8 zeigt eine schematische Darstellung des Abspritzabschnitts 31 des Brennstoffeinspritzventils 25 der Fig. 7 in Aufsicht. Dargestellt sind die Schlitze 34 und der Steg 35.

Die Erfindung ist nicht auf die dargestellten Ausführungsbeispiele beschränkt und z. B. auch für Brennstoffeinspritzsysteme mit mehr oder weniger Einspritzlöchern, Ein- und Auslaßventilen und insbesondere mehreren Zündkerzen und variablen Hubraumvolumina anwendbar.

## Patentansprüche

1. Brennstoffeinspritzsystem für Brennkraftmaschinen mit mindestens einem Brennstoffeinspritzventil (25), das Brennstoff in einen Brennraum (19) einspritzt, der von einer Zylinderwandung (17) begrenzt ist, in der ein Kolben (16) geführt ist, und mit einer in den Brennraum (19) ragenden Zündkerze (20), wobei das Brennstoffeinspritzventil (25) in dem Brennraum (19) im Bereich eines Gaseinlassventils (23) zur Zylinderwand (17) hin angeordnet ist und mehrere Brennstoffstrahlen (28, 29, 30) erzeugt,
**dadurch gekennzeichnet,**
**dass** die Brennstoffstrahlen (28, 29, 30) in drei Ebenen unter einem Winkel γ1 zwischen erster und zweiter Ebene sowie einem Winkel γ2 zwischen der zweiten und einer dritten Ebene orientiert sind, wovon die erste, dem Zylinderkopf (18) am nächsten liegende Ebene durch die zwei Brennstoffstrahlen (28) gebildet wird, die in den Bereich der Zündkerze (20) spritzen.

2. Brennstoffeinspritzsystem nach Anspruch 1,
**dadurch gekennzeichnet,**
**dass** Abspritzöffnungen (32) des Brennstoffeinspritzventils (25) so verteilt sind, dass zumindest zwei Brennstoffstrahlen (28) in den Bereich der Zündkerze (20) unter einem vorgegebenen Öffnungswinkel in den Brennraum (19) eingespritzt werden.

3. Brennstoffeinspritzsystem nach Anspruch 2,
**dadurch gekennzeichnet,**
**dass** die Zündkerze (20) auf der Winkelhalbierenden des Öffnungswinkels angeordnet ist.

4. Brennstoffeinspritzsystem nach Anspruch 3,
**dadurch gekennzeichnet,**
**dass** der Öffnungswinkel abhängig von einem Abstand des Brennstoffeinspritzventils (25) zu der Zündkerze (20) so groß ist, dass beidseits einer Zündelektrode der Zündkerze (20) ein zündfähiges Gemisch entsteht.

5. Brennstoffeinspritzsystem nach Anspruch 4,
**dadurch gekennzeichnet,**
**dass** weitere Brennstoffstrahlen (29, 30) bei einer Kolbenposition im Wesentlichen nahe dem oberen Totpunkt gleichmäßig in den übrigen Brennraum(19) ausgerichtet sind.

6. Brennstoffeinspritzsystem nach Anspruch 1,
**dadurch gekennzeichnet,**
**dass** die zweite Ebene aus drei Brennstoffstrahlen (30) gebildet wird, die zu den Brennstoffstrahlen (28) oder ersten Ebene versetzt sind, und der mittlere Brennstoffstrahl (29a) unter der Winkelhalbierenden des Öffnungswinkels der Brennstoffstrahlen (29) der ersten Ebene liegt.

7. Brennstoffeinspritzsystem nach Anspruch 6,
**dadurch gekennzeichnet,**
**dass** die dritte Ebene aus zwei Brennstoffstrahlen (30) besteht, die unter den Brennstoffstrahlen (28) der ersten Ebene liegen.

8. Brennstoffeinspritzsystem nach einem der Ansprüche 1 bis 7,
**dadurch gekennzeichnet,**
**dass** der Winkel γ1 einen Wert zwischen 20 und 30 aufweist.

9. Brennstoffeinspritzsystem nach einem der Ansprüche 1 bis 8,
**dadurch gekennzeichnet,**
**dass** der Winkel γ2 einen Wert zwischen 20 und 30 aufweist.

10. Brennstoffeinspritzsystem nach einem der Ansprüche 1 bis 8,
**dadurch gekennzeichnet,**
**dass** der Winkel γ1 gleich dem Winkel γ2 ist.

11. Brennstoffeinspritzsystem, nach einem der Ansprüche 1 bis 10,
**dadurch gekennzeichnet,**
**dass** die Anzahl der Brennstoffstrahlen gerade ist und eine gleiche Anzahl zu jeder Seite der Zündkerze (20) ausgerichtet ist.

12. Brennstoffeinspritzsystem nach einem der Ansprüche 1 bis 11,
**dadurch gekennzeichnet,**
**dass** die Brennstoffstrahlen Flachstrahlen sind und durch längliche Abspritzöffnungen des Brennstoffeinspritzventils (25) gebildet werden.

13. Brennstoffeinspritzsystem nach Anspruch 12,
**dadurch gekennzeichnet,**
**dass** die Abspritzöffnungen Schlitze (34) sind.

14. Brennstoffeinspritzsystem, nach Anspruch 13,
**dadurch gekennzeichnet,**
**dass** die Schlitze durch Stege (35) unterteilt sind.

15. Brennstoffeinspritzsystem nach einem der Ansprüche 1 bis 14,
**dadurch gekennzeichnet,**
**dass** der Kolben(16) auf der dem Brennstoffeinspritzventil (25) in Bezug auf eine Zylindermittelachse gegenüberliegenden Seite eine Quetschkante (27) aufweist.

16. Brennstoffeinspritzsystem nach einem der Ansprüche 1 bis 15,
**dadurch gekennzeichnet,**
**dass** der Kolben (16) eine Kolbenmulde (26) aufweist.

17. Brennstoffeinspritzsystem nach Anspruch 16,
**dadurch gekennzeichnet,**
**dass** die Kolbenmulde (26) in ihrer Form der Form des Strahlbildes des Brennstoffeinspritzventils(25) angepasst ist und kein Brennstoffstrahl (28, 29, 30) die Kolbenoberfläche direkt trifft.

## Claims

1. Fuel injection system for internal combustion engines having at least one fuel injection valve (25) which injects fuel into a combustion chamber (19) which is delimited by a cylinder wall (17), in which a piston (16) is guided, and having a spark plug (20) which protrudes into the combustion chamber (19), the fuel injection valve (25) being arranged in the combustion chamber (19) towards the cylinder wall (17) in the region of a gas inlet valve (23) and producing a plurality of fuel jets (28, 29, 30), **characterized in that** the fuel jets (28, 29, 30) are oriented in three planes at an angle γ1 between the first and second planes and at an angle γ2 between the second plane and a third plane, of which the first plane which lies closest to the cylinder head (18) is formed by the two fuel jets (28) which spray into the region of the spark plug (20).

2. Fuel injection system according to Claim 1, **characterized in that** ejection openings (32) of the fuel injection valve (25) are distributed in such a way that at least two fuel jets (28) are injected into the combustion chamber (19), into the region of the spark plug (20) at a predefined opening angle.

3. Fuel injection system according to Claim 2, **characterized in that** the spark plug (20) is arranged on the bisector of the opening angle.

4. Fuel injection system according to Claim 3, **characterized in that**, as a function of a spacing of the fuel injection valve (25) from the spark plug (20), the opening angle is so large that an ignitable mixture is produced on both sides of a sparking electrode of the spark plug (20).

5. Fuel injection system according to Claim 4, **characterized in that** further fuel jets (29, 30) are oriented uniformly into the remaining combustion chamber (19) in the case of a piston position substantially close to the top dead centre.

6. Fuel injection system according to Claim 1, **characterized in that** the second plane is formed from three fuel jets (30) which are offset with respect to the fuel jets (28) of the first plane, and the central fuel jet (29a) lies below the bisector of the opening angle of the fuel jets (29) of the first plane.

7. Fuel injection system according to Claim 6, **characterized in that** the third plane comprises two fuel jets (30) which lie below the fuel jets (28) of the first plane.

8. Fuel injection system according to one of Claims 1 to 7, **characterized in that** the angle γ1 has a value between 20 and 30.

9. Fuel injection system according to one of Claims 1 to 8, **characterized in that** the angle γ2 has a value between 20 and 30.

10. Fuel injection system according to one of Claims 1 to 8, **characterized in that** the angle γ1 is equal to the angle γ2.

11. Fuel injection system according to one of Claims 1 to 10, **characterized in that** the number of fuel jets is even and an identical number is oriented towards each side of the spark plug (20).

12. Fuel injection system according to one of Claims 1 to 11, **characterized in that** the fuel jets are fan jets and are formed by elongate ejection openings of the fuel injection valve (25).

13. Fuel injection system according to Claim 12, **characterized in that** the ejection openings are slots (34).

14. Fuel injection system according to Claim 13, **characterized in that** the slots are divided by webs (35).

15. Fuel injection system according to one of Claims 1 to 14, **characterized in that** the piston (16) on that side which lies opposite the fuel injection valve (25) in relation to a cylinder centre axis has a pinched edge (27).

16. Fuel injection system according to one of Claims 1 to 15, **characterized in that** the piston (16) has a piston recess (26).

17. Fuel injection system according to Claim 16, **characterized in that** the shape of the piston recess (26) is adapted to the shape of the jet pattern of the fuel injection valve (25) and no fuel jet (28, 29, 30) strikes the piston surface directly.

## Revendications

1. Système d'injection de carburant de moteurs à combustion interne comportant au moins un injecteur (25) qui injecte du carburant dans une chambre de combustion (19) délimitée par une paroi de cylindre (17) guidant un piston (16) et une bougie (20) pénétrant dans la chambre de combustion (19), l'injecteur (25) prévu dans la chambre de combustion (19) dans la région d'une soupape d'admission de gaz (23) en direction de la paroi de cylindre (17) générant plusieurs jets de carburant (28, 29, 30),
**caractérisé en ce que**
les jets de carburant (28, 29, 30) sont orientés dans trois plans avec un angle (γ1) entre un premier et un second plan ainsi qu'un angle (γ2) entre le second plan et un troisième plan,
le premier plan le plus proche de la culasse (18) étant formé par les deux jets de carburant (28) projetés dans la région de la bougie (20).

2. Système d'injection de carburant selon la revendication 1,
**caractérisé en ce que**
les orifices d'éjection (32) de l'injecteur de carburant (25) sont répartis pour qu'au moins deux jets de carburant (28) injectent dans la région de la bougie d'allumage (20) sous un angle d'ouverture prédéfini, dans la chambre de combustion (19).

3. Système d'injection de carburant selon la revendication 2,
**caractérisé en ce que**
la bougie (20) est orientée suivant la bissectrice de l'angle d'ouverture.

4. Système d'injection de carburant selon la revendication 3,
**caractérisé en ce que**
l'angle d'ouverture dépendant de la distance de l'injecteur de carburant (25) par rapport à la bougie (20) est suffisamment grand pour former un mélange inflammable de part et d'autre de l'électrode de la bougie (20).

5. Système d'injection de carburant selon la revendication 4,
**caractérisé en ce que**
d'autres jets de carburant (29, 30) pour une position du piston qui se situe pratiquement à proximité du point mort haut, sont alignés régulièrement dans le restant de la chambre de combustion (19).

6. Système d'injection de carburant selon la revendication 1,
**caractérisé en ce que**
le second plan est formé par trois jets de carburant (30) décalés par rapport au jet de carburant (28) du premier plan et le jet de carburant intermédiaire (29a) se situe sous la bissectrice de l'angle d'ouverture du jet de carburant (29).

7. Système d'injection de carburant selon la revendication 6,
**caractérisé en ce que**
le troisième plan correspond à deux jets de carburant (30) situés sous les jets de carburant (28) du premier plan.

8. Système d'injection de carburant selon l'une des revendications 1 à 7,
**caractérisé en ce que**
l'angle (γ1) a une valeur comprise entre 20° et 30°.

9. Système d'injection de carburant selon les revendications 1 à 8,
**caractérisé en ce que**
l'angle (γ2) a une valeur comprise entre 20° et 30°.

10. Système d'injection de carburant selon l'une des revendications 1 à 8,
**caractérisé en ce que**
l'angle (γ1) est égal à l'angle (γ2).

11. Système d'injection de carburant selon l'une des revendications 1 à 10,
**caractérisé en ce que**
le nombre de jets de carburant est pair et un même nombre de jets est dirigé vers quatre côtés de la bougie d'allumage (20).

12. Système d'injection de carburant selon l'une quelconque des revendications 1 à 11,
**caractérisé en ce que**
les jets de carburant sont des jets plats formés par des orifices d'éjection allongés de la vanne d'injection de carburant (25).

13. Système d'injection de carburant selon la revendication 12,
**caractérisé en ce que**
les orifices d'éjection sont des fentes (34).

14. Système d'injection de carburant selon la revendication 13,
**caractérisé en ce que**
les fentes sont subdivisées par des entretoises (35).

15. Système d'injection de carburant selon l'une des revendications 1 à 14,
**caractérisé en ce que**
le piston (16) présente une arête d'écrasement (27) sur le côté en regard de l'injecteur (25) par rapport à l'axe central du cylindre.

16. Système d'injection de carburant selon l'une des revendications 1 à 15,
**caractérisé en ce que**
le piston (16) a une gorge de piston (26).

17. Système d'injection de carburant selon la revendication 16,
**caractérisé en ce que**
la gorge de piston (26) est adaptée par sa forme à celle de l'image du jet de l'injecteur de carburant (25) et aucun jet de carburant (28, 29, 30) touche directement la surface supérieure du piston.
